# EUROPEAN PATENT SPECIFICATION

(11) **EP 1 987 319 B1**
(45) Date of publication and mention of the grant of the patent: **11.04.2018**
(21) Application number: 07711522.8
(22) Date of filing: 13.02.2007
(51) Int. Cl.: G01B 11/06, G01N 21/51, G01N 33/483

(54) **MEASURING SYSTEM FOR THE ACQUISITION OF THE LAYER THICKNESS OF A DEPOSIT**
MESSSYSTEM ZUR ERFASSUNG DER SCHICHTDICKE EINER ABLAGERUNG
SYSTEME DE MESURE POUR L'ACQUISITION DE L'EPAISSEUR DE COUCHE D'UN DEPOT

(30) Priority: 13.02.2006 DE 102006007614; 11.08.2006 US 822082 P
(43) Date of publication of application: 05.11.2008
(73) Proprietor: Solenis Technologies Cayman, L.P., 8200 Schaffhausen (CH)
(72) Inventor: GRÜNER, Giselher, 04129 Leipzig (DE); ÖQVIST, Lotta Kanto, 47906 Kempen (DE)
(74) Representative: LKGLOBAL Lorenz & Kopf PartG mbB Patentanwälte
(86) International application number: PCT/EP2007/001226
(87) International publication number: WO 2007/093374

(56) References cited:
- DE-A1- 4 243 418
- DE-A1- 10 341 397
- US-A- 4 912 332
- US-A- 5 644 402

## Description

### FIELD OF THE INVENTION

The invention relates to a measuring system for detecting the layer thickness, the stability, the density and the homogeneity of a deposit that accumulates on the inside surface of the wall of a vessel. The measuring system is also suitable for detecting the rate of growth of such deposits.

### BACKGROUND OF RELATED TECHNOLOGY

Deposits of inorganic or organic composition form a fundamental problem as regards the operation of industrial plants in which fluids, particularly aqueous media move through pipe systems or are stored (intermediately) in containers.

Thus, for example, inorganic deposit of scales can interfere with the operation of refrigerating plants or, in the worst case, cause a total shutdown thereof. Thus, there is a need to have information concerning the existence or the thickness of such an inorganic deposit in a timely manner so that appropriate counter-measures can be taken.

Furthermore, organic deposits often occur in the form of a biofilm. These are formed primarily in aqueous systems at the interface with a solid phase and consist of a slimy layer in which micro-organisms (e.g. bacteria, algae, fungi, and protozoa) are embedded. Biofilms are formed when micro-organisms settle at the interface. As a rule, the biofilm contains, other than the micro-organisms, primarily water and extra-cellular polymeric substances exuded by the micro-organisms which, in conjunction with the water, form hydro-gels and contain other nutrients or substances. Often, particles are included in the resulting slimy matrix that are found in the aqueous medium adjacent the interface. If the conditions for growth are optimal, particularly the temperature and favorable nutrients, then the deposits can grow to a substantial layer thickness. For example, in industrial plants, this can lead to operational errors owing to reduced pipe cross-sections or choking of filters. Moreover, fragments can be released from the biofilm that can affect the operation of the plant. Finally, the material released by the biofilm organisms can additionally accelerate the corrosion of their substrates.

What is particularly problematic is the formation of biofilms in papermaking plants, particularly in the components that are used for the accommodation and transfer of an aqueous fiber suspension. The biofilm (also called "fouling") which forms in such a papermaking plant is also characterized by the fact that it contains a high proportion of fibers, fine substances, and inorganic pigments that are bound by the organic matrix. Such biofilms typically are accompanied by protective exopolysaccharides ("slime", EPS) and occur at the interface of these equipment surfaces and process water streams. Additionally, inorganic contaminants, such as calcium carbonate ("scale") and organic contaminants often deposit on such surfaces. These organic contaminants are typically known as "pitch" (e.g., resins from wood) and "stickies" (e.g., glues, adhesives, tape, and wax particles).

The biofilm often has a fur-like structure whose thickness can be of the order of a few centimeters. If the layer thickness of the biofilm is too great, it might break away from the substrate. The portions thus released might cause faulty operation, particularly tearing of the paper webs during paper manufacture, which leads to high consequential costs. In order to avoid this, biocides are added, which, however, are expensive and pose a health hazard. Agents which have enjoyed widespread use in such applications include chlorine, organo-mercurials, chlorinated phenols, organo-bromines, and various organo-sulfur compounds, all of which are generally useful as biocides but each of which is attended by a variety of impediments.

It is thus necessary to monitor the layer thickness of the biofilm and possibly the rate of growth thereof in order to optimize the addition of biocides and/or of other deposit control agents.

There are a variety of devices that have been developed to measure the biofilms in papermaking plants.

One approach provides a disk of Perspex in a container that is connected to the respective component of the paper machines in a bypass and through which the aqueous suspension is passed. The Perspex disk is periodically removed from the liquid by means of a motor and then light beamed through it. The diminution of the light intensity measured is compared with that obtained when there is no deposit. Based on this, conclusions are drawn regarding the thickness of the deposit and its rate of growth. This method suffers from the drawback that the material of the Perspex disk is not the same as that of the containers and pipes, which means that the conditions for growth are not identical. Moreover, the deposit comes into contact with air owing to its periodic withdrawal, which also leads to different growth conditions. In addition, this method can only be used as a bypass and cannot be directly integrated in the pipes or containers of the plant.

A second approach consists in the acquisition of the layer thickness of the biofilm using an ultra-sound sensor that detects and evaluates a reflection signal which varies depending on the thickness of the biofilm. The ultra-sound method, however, can only be used where there is a defined interface with the water. This is particularly not so in the case of fur-like deposits, as a result of which the measurement cannot be made with adequate reliability. A third approach consists in placing small disks made of stainless steel in the liquid, which are left there for a specific period of time. The deposits on the steel coupons may be subsequently analyzed by microscopy, such as Apotome (AP), Epifluorescence (EP), Scanning Electron (SEM) with EDX, and Confocal Laser Scanning Microscopy (CLSM). These methods are, however, very time-consuming and not suitable for continuous process control.

In the prior art, optical measurements in pipes are known e.g. from DE 103 41 397 A1, US4,912,332 and DE 42 43 418 A1. There is a demand for a method that provides continuous online information of the tendency of deposit formation. Only if the formation of such deposits is detected at an early stage, effective and economic counter-measures may be taken, e.g. the addition of suitable deposit control agents. The method should allow for an online measurement that may be installed as part of any chest wall, i.e., that can be directly integrated in the pipes or containers of the plant. In consequence, the method does not require to be used as a bypass.

It is an object of the invention to provide an alternative method of measurement that has advantages when compared with prior art methods.

### SUMMARY OF THE INVENTION

This object is achieved using a measuring system for determining a characteristic of a deposit having the features defined in claim 1. For this purpose, the measurement system comprises
at least one light-emitting unit comprising
- a first structure which is integrated in the vessel wall and via which a beam of light can pass into the vessel and into any deposit that may have accumulated on the inside surface of the vessel wall;
   and a detection unit comprising
- a second structure which is integrated in the vessel wall and through which at least a portion of the beam of light scattered and/or reflected by the deposit, if present, can return through the vessel wall,
- a light detector disposed such that its light-sensitive surface faces the vessel wall at the location in which said second structure is integrated, i.e. the second region (structure) of the vessel wall.

It has been surprisingly found by using the measuring system according to the invention in a papermaking plant that the formation of various deposits in the water cannot be quantified by conventional plate counts, but by means of the measuring system according to the invention. Further, it has been found that the measurement achieved by cultivation never reaches the amount actually found on the surfaces of the steel coupons. This also shows the necessity of alternative methods for the analysis of the water systems. Online analytical methods are important to be able to take counter-measures when changes of the environment in the papermaking plant occur over time. In consequence, production and quality disturbances at the paper machine may be avoided.

### BRIEF DESCRIPTION OF THE DRAWINGS

- Figure 1: is a diagrammatic sectional view of the vessel wall in the region of a measuring system of the present invention.
- Figure 2: is a diagrammatic top view of the measuring system as regarded from the inside surface of the vessel wall.
- Figure 3: is a schematic illustration of two types of deposit with different stability.
- Figure 4: shows signals from the measuring system in the development phase (days 1-18) and in the phase thereafter (days 49-65).
- Figure 5: shows signals from the measuring system, in a later stage of the development.
- Figure 6: shows signals from the measuring system, LWC mill.
- Figure 7: shows that the data from the measuring system can be correlated with changes in process parameters.

### DETAILED DESCRIPTION OF THE INVENTION

For the purpose of the description, the expression "integrated in the vessel wall" shall mean that an element is incorporated into the vessel wall so that said element has become an integral part of the vessel wall. For example, an element is to be considered as being integrated in the vessel wall, when the vessel wall comprises a cavity, e.g. a hole, and said element has a shape and size that fits into said cavity. Preferably, said element should be incorporated in the vessel wall in such a manner that the vessel wall at the location of said element remains waterproof.

The measurement system according to the invention may be used as online device. Preferably, the measurements are performed on stainless steel substrates on which deposits have formed. The goal with this development is to determine as much data as possible to make the relevant decisions before any disturbances occur in the process. A device that can be directly built into the process gives a possibility to gain reliable data, where the changes in flow etc. are not factors for any false readings.

The measuring system is suitable as long as the deposit whose thickness is to be measured has adequate transparency for the beam of light. In other words, the deposit should be of such a kind that the beam of light can pass into it and be scattered or reflected by it.

This is particularly the case with inorganic scale in cooling plants, especially in cooling towers of power plants; deposits occurring in devices used for the processing of food or beverages, such as breweries, e.g., screw extruders, meat grinders, and the like; deposits occurring in devices used for wastewater treatment; deposits occurring in devices used in exhaust gas purification; deposits occurring in devices used in mining industry or oil production.

Furthermore, it is particularly preferred that the deposit is a biofilm, e.g., a biofilm occurring in papermaking plants. Deposits in the paper machine loops are composed of inorganic, organic or microbial matter, respectively. Nevertheless, most of the deposits found contain all these basic types, which have been included one after the other to form a complex matrix. For the purpose of the description, the term "biofilm" preferably refers to all kinds of slimy layers in which micro-organisms (e.g. bacteria, algae, fungi, and protozoa) are embedded. Said biofilms may contain, other than the micro-organisms, primarily water, extra-cellular polymeric substances exuded by the micro-organisms which, in conjunction with the water, form hydro-gels and contain other nutrients, or substances, such as fibers, fines, inorganic pigments, particularly scale, aluminum hydroxide (alum addition in neutral pH-range), natural and synthetic substances, like pitch, fatty acids, sizing agents (alkenylsuccinic anhydride [ASA], alkylketene dimer [AKD], rosin size, etc.), white pitch, and so called "stickies" (polyacrylates, polyvinylacetate, ethylene vinylacetate, styrene butadiene latex, etc.).

In many instances the deposits occurring in the paper machine loops are multi-layered, i.e. comprise different layers that are substantially composed of different main constituents but also contain minor amounts of constituents that are the main constituents of the adjacent layers.

For example, deposition may be initiated by the formation of a first layer of alkenylsuccinic anhydride (ASA), a sizing agent designed to increase resistance to water penetration in the case of paper formed under neutral or alkaline conditions. When the first layer of ASA is built up, the rest of the deposition is accelerated. Within a short period of time, bacteria are actively taking part in the deposition and create exopolysaccharides (EPS) that in turn entrap different types of material.

There are also bacteria that can work as an initiator in the paper machine loops, and considered to be one of the most important is Deinococcus spp. This bacteria type creates a pink deposit formation; however, ultrastructural analysis did not give any indications for their involvement in production of EPS. It has also been described that the warm paper machine temperatures offer a manmade ecological niche for many bacteria one normally would find in hot springs. The attachment of other bacteria types and microorganisms on top of the initial formation is a later step of the deposit formation, and is done by other types of bacteria.

For the purpose of the specification the term "biofilm" preferably refers to the multitude of all layers that may have been deposited on each other.

Various deposit control agents have been developed which may be added to the papermaking plant during operation. Many of these deposit control agents are optimized for the removal of specific deposits, i.e. a composition that has been customized for the removal of "stickies" usually differs from a composition that has been customized for the removal of "slime".

The measuring system according to the present invention allows for online monitoring the development of the thickness, density, homogeneity and/or stability of the deposits formed during an ongoing process, e.g. paper manufacture. Thickness, rate of growth, density, homogeneity and/or stability of the deposit may be monitored simultaneously. Based on the set of information provided by the measurement it may be concluded which particular type of deposit has been formed. In consequence, the appropriate deposit control agent may be selected and added in order to initiate suitable counter-measures without interrupting the process. The effect of the deposit control agent can be observed and if necessary, its concentration, location of supply, chemical composition, etc. may be changed and adjusted, respectively.

The present invention is well suited for studying the growth of biological materials and the deposition of organic and inorganic contaminants on various substrates. Such biological materials include, for example, bacteria, fungi, yeast, algae, diatoms, protozoa, macroalgae, and the like. In the pulp and paper industry, process water provides an excellent supply of organic and inorganic materials which promote the growth of bacteria (biofilms) and protective exopolysaccharides (slime) which occur at the interface of machine surfaces (typically steel) and process water streams. Additionally, inorganic contaminants, such as calcium carbonate ("scale") and organic contaminants often deposit on such surfaces. These organic contaminants are typically known as pitch (e.g., resins from wood) and stickies (e.g., glues, adhesives, tape, and wax particles). The present invention allows for compositions to be studied or screened which will serve to destroy or prevent the growth of such biofilms and slime and the deposition of such organic and inorganic contaminants.

It has been surprisingly found that the measuring system according to the invention overcomes the disadvantages of the prior art and provides a cost-effective solution for the acquisition of the layer thickness of a deposit, particularly a biofilm. By means of the measuring system according to the invention, it is possible to measure the thickness of biofilms having a fur-like structure such as occur in papermaking plants. Furthermore, it is possible to measure not only the thickness of the deposit and its rate of formation, but also its density, its homogeneity and/or its stability, in order to get further insights into the deposition processes taking place thereby providing the information that is needed for initiating appropriate counter-measures.

Using a measuring system according to the present invention, a beam of light is passed from the light-emitting unit to the interior of the vessel. For this purpose, provision is made for the vessel wall to have a first structure through which a beam of light can be passed from outside the vessel to its interior, that is, into pipes or containers filled with a liquid medium.

The light-emitting unit may contain any light source that is suitable to emit electromagnetic radiation. Preferably, the wavelengths of the light is within the range of from 150 nm to 10,000 nm, more preferably from 170 nm to 3,000 nm and most preferably from 200 nm to 1,000 nm. The light may be chromatic or monochromatic. Preferably, the light is coherent. Preferably, the light emitting unit contains a laser. In a particular preferred embodiment the light source is a laser diode having a wavelength within the range of from 610 to 720 nm, more preferably from 630 to 690 nm and most preferably from 650 to 670 nm.

According to a preferred embodiment of the invention, the first structure is designed in such a manner that the beam of light is not aimed vertically or almost vertically but at a pre-defined angle of inclination that lies in the range of from 10° to 80° with respect to the inside surface of the vessel wall. The pre-defined angle of inclination is important since on the one hand, the detection unit is placed at a distance from the light-emitting unit and thus, scattering or reflection of the beam of light must be available in such a manner that the scattered and/or reflected beam of light can fall on the detection unit at least partially. In addition, the distance to be traversed in the deposit, particularly in the biofilm, by the beam of light is longer, owing to which the scatter intensity thereof is increased, or a suitable angle of reflection can only be achieved at the interface between the deposit and the fluid phase. Thus, the preferred angle of inclination with respect to the inside surface of the vessel wall lies in the range of from 20° to 70°, preferably 30° to 60°, most preferably from 40° to 50°, and is in particular about 45°.

In a preferred embodiment of the present invention, the distance from the light-emitting unit to the detection unit is within the range of from 0 µm to 3.0 mm, more preferably from 10 µm to 1.0 mm, still more preferably from 25 µm to 0.5 mm, most preferably from 50 µm to 0.25 mm and in particular from 50 µm to 0.1 mm. In case that the light emitting unit and/or the detection unit are equipped with an optical fiber, the above distances preferably refer to the distal ends of said optical fibers.

The detection unit has a (second) structure that is accommodated in the vessel wall. The second structure must be designed in such a manner that at least a portion of the beam of light scattered and/or reflected by the deposit can pass from the interior of the vessel toward its exterior. In other words, the second structure must be suitably designed in respect of its dimensions and position relative to the light emitting unit and must be made of a material that is (at least substantially) transparent for the beam of light. Suitable materials are glass or transparent polymers, such as epoxy resins. After passing through the second structure, the beam of light falls on the light-sensitive surface of a light detector disposed adjacent the second structure. The signals from the light detector are subsequently evaluated and permit inferences to be drawn concerning the layer thickness, its stability, density, homogeneity and, if required, concerning the rate of growth of the deposit.

A preferred embodiment of the measuring system provides for the first structure to contain an optical fiber that lies in a bore in the vessel wall and whose light-emitting end is disposed flush with the inside surface of the vessel wall. In other words, the optical fiber is laid through the vessel wall and its end remote from the light source is flattened in such a manner that the transition to the adjoining regions of the vessel wall has no edges. In a preferred embodiment, the bore has, at the inside surface of the vessel wall, a diameter in the range of from 10 to 1,000 µm, preferably from 25 to 500 µm, more preferably from 50 to 300 µm, most preferably from 75 to 300 µm and is in particular about 200 µm. In another preferred embodiment, the bore has, at the inside surface of the vessel wall, a diameter in the range of from 10 to 500 µm, preferably from 25 to 250 µm, more preferably from 50 to 150 µm, most preferably from 75 to 125 µm and is in particular about 100 µm. If the diameter is greater than the values specified, there is no assurance that the region around the bore (particularly in papermaking plants) would be covered by the deposit or biofilm. If the diameter is less than the values specified, then the light intensity is too high for an accurate measurement and can, for example, destroy the biofilm, which again leads to inaccurate measurement.

According to another preferred embodiment, the second structure comprises a transparent material that is positioned in a slit at the inside surface of the vessel wall and is laid flush with the inside surface of the vessel wall. The second structure serves to direct the light scattered and/or reflected by the deposit or biofilm from the inside surface of the vessel wall to the light detector. The transparent material is preferably an epoxy resin, and the size of the slit is to be chosen such that this area of the vessel wall is covered with the deposit or biofilm. The slit should preferably have a slit width of from 10 to 500 µm. Above this value, particularly in papermaking plants, there is no assurance that the deposit or biofilm will grow over the second structure. If the slit width is below the value specified, then, particularly in papermaking plants, adequate measurement accuracy cannot be guaranteed. The preferred width of the slit is in the range of from 50 to 400 µm, more preferably from 100 to 300 µm, most preferably from 150 to 250 µm, and is, in particular, about 200 µm.

Moreover, the light-sensitive surface of the optical detector is a photodetector array. Such a light detector is able to provide a spatially resolved signal for the scattered and/or reflected beam of light. Such a spatially resolved signal facilitates particularly reliable evaluation of the measurement as described in detail below. Preferably, the array comprises at least 64 pixels, more preferably at least 128 pixels and in particular at least 256 pixels. The lengths of the light sensitive structure is preferably within the range of from 9 to 23 mm, more preferably 11 to 21 mm, most preferably 13 to 19 mm and in particular 15 to 17 mm. The spectral range should be compatible with the wavelength of the light-emitting unit. For example, the spectral range may cover 400 to 980 nm. Preferably, the photodetector array is equipped with a filter, such as an edge filter that, e.g., filters all wavelengths shorter than red.

In a preferred embodiment the light-emitting unit emits UV light, preferably having a wavelength within the range of from 200 to 400 nm, and the photodetector array detects light having a wavelength that is higher than the particular wavelength that is emitted by the light-emitting unit. Under these circumstances, fluorescence signals emitted from bacteria and other constituents of the deposit may be used as further information providing deeper insights in the composition thereof.

In another preferred embodiment the interaction of linearly polarized light emitted by the light-emitting unit with the deposit is measured thereby providing another information that is useful to characterize the nature of the deposit and its properties.

In a preferred embodiment the measurement system according to the invention contains one or two light sources and a single light detector, or a combination of several such arrangements that are located on the surface of the sensor.

The light detector generates an electrical signal. Evaluation of data may be performed by algorithms and conventional devices that are known to the person skilled in the art and that are commercially available.

The measuring system preferably also includes an evaluation unit that contains the following components:
- a memory, in which comparative data is stored; and
- a comparator unit,
   i. in which a measuring signal from the optical detector is available at the input,
   ii. which communicates with the memory for transmitting the comparative data and
   iii. which is designed to generate a benchmark signal based on a comparison of the measuring signal with the comparative data.

Preferably, comparative data are derived from the vessel after significant deposits have accumulated.

Accordingly, the measuring signals generated by the light detector are made available to the comparator unit and correlated with the comparative data stored in the memory. The result of this comparison is a benchmark signal. The benchmark signal can then be reproduced by an output unit of the evaluation module in the form of an acoustic signal, for example, or it can be displayed on a monitor. It is particularly preferred that the evaluation signal serves as a control signal for a regulating unit for biocides or other deposit control agents. In this manner, biocides or other deposit control agents can be fed automatically for inhibiting the growth of, and/or for eliminating, the biofilm.

Other preferred embodiments of the measuring system according to the invention are illustrated by the variants displayed in the exemplary embodiment. The invention is described in further detail below with reference to an exemplary embodiment and to the associated drawings.

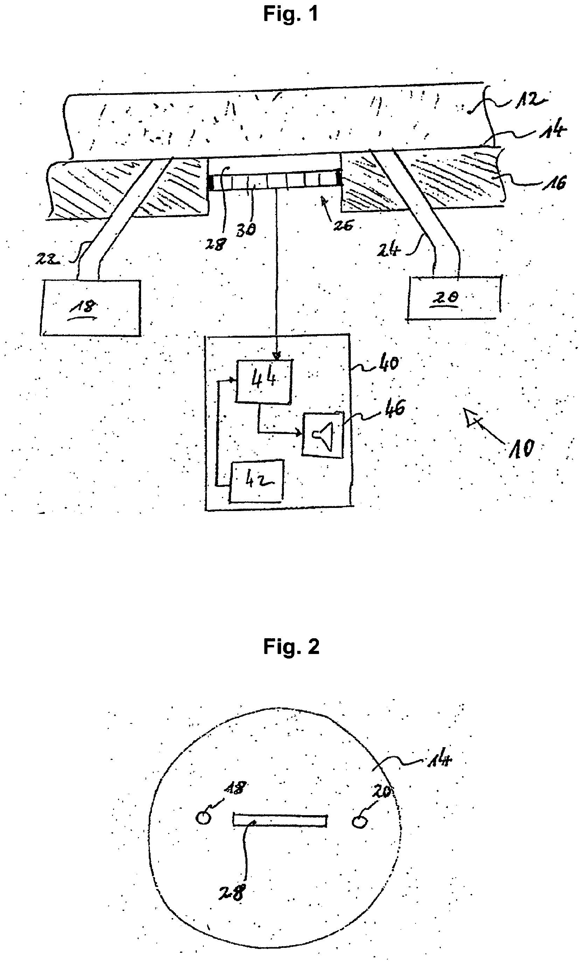

Figure 1 illustrates highly diagrammatically how a measuring system 10 can be implemented to ascertain the layer thickness of a deposit 12, e.g. a biofilm, on the inside surface 14 of the wall of a vessel 16. The vessel wall 16 is itself part of a plant, e.g. for the manufacture of paper, especially of components that serve to accommodate and transfer an aqueous fiber suspension for the manufacture of paper.

The biofilm 12 forms on the inside surface 14 of the vessel wall 16 and exhibits a fur-like structure, that is, it contains fiber-like filaments that extend from the inside surface 14 of the vessel wall 16 toward the interior of the vessel. A vessel within the scope of the invention contains pipes and containers that are used to accommodate and transfer aqueous fiber suspensions for the manufacture of paper.

The measuring system 10 can be directly integrated in the papermaking plant. However, the measuring system 10 could alternatively be installed in a bypass of the plant so as to simplify maintenance of the measuring system 10. Moreover, in this position, shower water or fresh water can be pumped through the bypass during measurement to prevent high scatter of the beam of light by the fiber suspension.

The measuring system illustrated in Figure 1 includes two light-emitting units 18 and 20. The light-emitting units 18 and 20 contain a light source and appropriate optical elements for generating and transmitting a beam of light required for the measurement. Moreover, the light-emitting units 18 and 20 each have an optical fiber 22 and 24 respectively serving to guide the beam of light through the vessel wall 16. These optical fibers are flattened in such a manner at their ends near the inside surface 14 of the vessel wall 16 that they are flush with the inside surface 14. Moreover, the relative alignment of the optical fibers 22 and 24 is such that the beam of light emerges at an angle of 45° (with respect to the inside surface 14 of the vessel wall 16) and thus impinges on the biofilm at this angle.

The optical fibers 22 and 24 are laid through appropriately-sized holes in the vessel wall 16 as far as the inside surface 14. The diameter of these holes at the inside surface 14 is of the order of 100µm.

The measuring system 10 further includes a detection unit 26, with which the scattered or reflected light can be detected. The detection unit 26 contains a second structure integrated in the vessel wall 16 that is made of a material, an epoxy resin in this case, that is pervious to the beam of light scattered or reflected by the biofilm. This additional structure is designed as a slit 28 having a slit width of approx. 100 µm (cf. Figure 2).

A light detector 30 is positioned below the second structure and transparent to the beam of light and has a photodetector array as its light-sensitive surface, in this case. The light detector 30 makes it possible to detect the intensity of the beam of light locally along the length of the slit 28.

Finally, the measuring system 10 includes an evaluation module 40. The evaluation module 40 contains a conventional type of memory 42, in which comparative data are stored. In addition, a comparator unit 44 is available in which a measuring signal from the light detector is present on the input side and which is communicates with the memory 42 via a signal line for the transmission of the comparative data. The comparator unit 44 now compares the measuring signal (provided by the light detector and optionally in digital form) with the comparative data in the memory 42. The comparison provides a measure of the thickness of the biofilm 12. Based on this, the comparative data in the memory 42, if necessary resolved locally, provide information regarding the intensity of the scattered and/or reflected beam of light for a specific thickness of the biofilm 12, for which reason calibration is necessary prior to the first use of the system. The thickness of the deposit can be calculated from the distribution of light measured by the array. The comparator unit 44 now generates a benchmark signal based on the comparison of the values mentioned above, which - as illustrated here by way of example - can be fed to a loudspeaker 46 as the output unit. Thus, for example, it is possible to generate an acoustic warning via the loudspeaker 46 when the layer thickness exceeds a specific value. Alternatively, or in addition, the benchmark signal can be used to control an input unit for a biocide or another deposit control agent so that the addition of expensive substances posing a health hazard can be optimized.

The beam of light is scattered and/or reflected at various intensities with different layer thicknesses of the biofilm 12 and impinges accordingly on different elements of the photodetector array depending on the layer thickness. In the case of a low layer thickness the scatter/reflection of the beam of light takes place in such a manner that it impinges on the outer elements of the photo-receiver array. As the layer thickness increases, the light intensity of the ray received by the inner elements of the photodetector array also increases. It is thus possible to draw conclusions regarding the layer thickness and/or the growth of the same and also, if required, regarding the density, stability and/or homogeneity of the biofilm merely on the basis of the various light intensities measured by the individual elements of the photodetector array. The stability of the biofilm can be derived from the fluctuations of the light intensities measured by the elements of the array, which fluctuations are due to the movements of the film structures caused by the liquid that passes by. The measuring system 10 illustrated in Figure 1 with light-emitting units 18 and 20 arranged on both sides flush with the slit 28 is characterized in that they support the measuring principle described above in a simple manner. At the commencement of measurement, in both the lefthand and right-hand border areas of the photodetector array increased light intensities are detected, which, when summated, yield a better signal-to-noise ratio. At the same time, or alternatively, the intensity of the two signals can be compared with each other in order to draw inferences regarding the homogeneity of the biofilm 12, for example. Finally, in the case of geometrically identical positioning of the light-emitting units 18 and 20 with respect to the light detector 30 disposed in a center element of the photodetector array, the light intensities can be summated to form an amplified measuring signal. This signal, for example, can be used to calibrate the measuring system 10.

The measuring system according to the present invention allows for measuring the thickness, the rate of growth, the density, the homogeneity and/or the stability of these deposits. The rate of growth is calculated by the change of film thickness over a certain period of time. Variations in layer thickness, layer density and layer homogeneity also result in a backscattered radiation response.

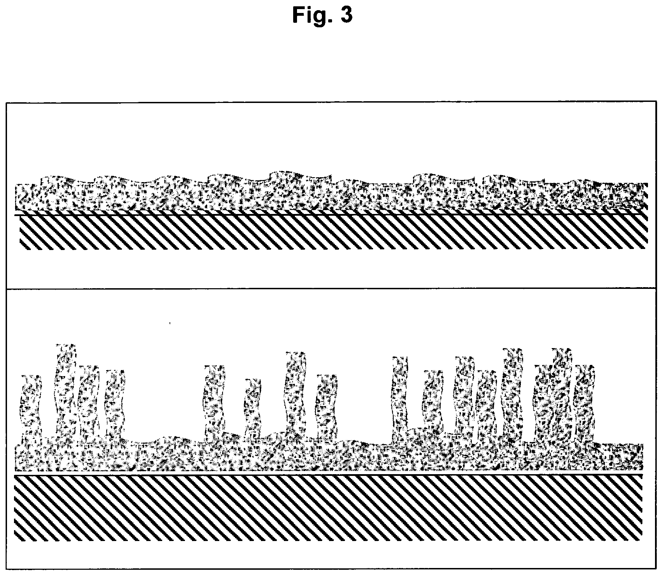

Figure 3 shows typical deposit structures that can be easily monitored by the measuring system. With increasing layer thickness the deposit pieces tend to be partially or totally released from the surface they adhere to. The stability of the deposit is also highly affected by the water content. The measuring system provides information about the deposit formation and allows conclusions to be drawn about the performance of chemical deposit control programs.

A second aspect of the invention relates to the use of the measuring system according to the invention, as described above, corresponding to one of the above-mentioned embodiments, for the determination of a characteristic of a deposit in a water bearing system, particularly for the acquisition of the layer thickness and/or density and/or homogeneity and/or stability of a deposit in a water bearing system.

The measuring system according to the invention can be used with water from any water bearing system including natural water and water used in industrial water systems. Industrial water systems include, but are not limited to, cooling tower water systems (including open recirculating, closed and once-through systems); petroleum wells, downhole formations, geothermal wells and other oil field applications; boilers and boiler water systems; mineral process waters including mineral washing, flotation and benefaction; paper mill digesters, washers, bleach plants and white water systems; black liquor evaporators in the pulp industry; gas scrubbers and air washers; continuous casting processes in the metallurgical industry; air conditioning and refrigeration systems; industrial and petroleum process water; indirect contact cooling and heating water, such as pasteurization water; water reclamation and purification systems; membrane filtration water systems; food processing streams (meat, vegetable, sugar beets, sugar cane, grain, poultry, fruit and soybean); and waste treatment systems as well as in clarifiers, liquid-solid applications, municipal sewage treatment and industrial or municipal water systems.

In a preferred embodiment, the water bearing system is a component of a papermaking plant that is used to accommodate and transfer aqueous fiber suspensions for paper manufacture, such as tanks, towers, pipes, showers, channels, headboxes, pumps, screens, refiners, pulpers, flotation units, wires and felts.

Since fur-like films form in such plants and since these are difficult to measure with conventional measuring systems, the invention now presented at least represents a useful alternative.

Preferably, the measuring system is directly integrated in the papermaking plant, i.e. not in a bypass. Preferably, the measurement is performed as an online measurement.

In a preferred embodiment of the use according to the invention, the rate of formation of the deposit is measured.

Preferably, the deposit is a biofilm.

In another preferred embodiment, the water bearing system is a component of refrigerating plants through which the coolant flows or which contains the coolant. A further aspect of the invention relates to the use of a measuring system, as described above, corresponding to one of the above-mentioned embodiments, for the acquisition of the layer thickness and/or density and/or homogeneity and/or stability of scale in those components of refrigerating plants through which the coolant flows or in which the coolant is present.

A third aspect of the invention relates to a process for monitoring the accumulation of a deposit, preferably of a biofilm, on the inside of a vessel wall of a component of a papermaking plant, which serves the purpose of accommodating or transferring an aqueous fiber suspension employed in papermaking, comprising the step of measuring a characteristic, particularly the layer thickness and/or density and/or homogeneity and/or stability, of said deposit by means of the measuring system as described above, corresponding to one of the above-mentioned embodiments.

Preferably, the measuring system is directly integrated in the papermaking plant, i.e. not in a bypass. Preferably, the measurement is performed as an online measurement.

Further preferred embodiments of the process for monitoring the accumulation of a deposit according to the invention are described here below in connection with another process according to the invention, namely in connection with a process for the preparation of paper. The embodiments specified here below, however, are also preferred embodiments of the process for monitoring the accumulation of a deposit described supra.

A fourth aspect of the invention relates to a process for the preparation of paper in a papermaking plant equipped with a measuring system, as described above, corresponding to one of the above-mentioned embodiments, and a regulating unit for a deposit control agent, the process comprising the steps of:
a) determining a characteristic of a deposit, preferably a biofilm, that accumulates on the inside of a vessel wall of a component of a papermaking plant, which serves the purpose of accommodating or transferring an aqueous fiber suspension employed in papermaking, by means of the measuring system, thereby generating a measuring signal;
b) comparing the measuring signal generated in step a) with a predetermined threshold value; and
c) adjusting the supply of a deposit control agent by means of the regulating unit in dependence of the comparison made in step b).

Preferably, the characteristic is selected from the group consisting of layer thickness, density, homogeneity and stability.

If the comparison in step b) reveals that the measuring signal is higher than the threshold value, the regulation unit may be adjusted in that the supply of deposit control agent will be e.g. increased, and if the measuring signal is lower than the threshold value, the regulation unit may be adjusted in that the supply of deposit control agent will be e.g. decreased, and vice versa.

In a preferred embodiment of the process according to the invention, the measuring signal generated by the detection unit of the measuring system is stored in a suitable memory. Preferably, a data point is stored at least every hour, more preferably at least every 30 minutes, still more preferably at least every 15 minutes, most preferably at least every 5 minutes and in particular at least every 60 seconds. The data point that is stored may be the average value of several individual data points measured over a time interval that is shorter than the period of time between the storage of given data point in the memory and the storage of the subsequent data point.

Preferably, the measuring system is directly integrated in the papermaking plant, i.e. not in a bypass. Preferably, the measurement is performed as an online measurement.

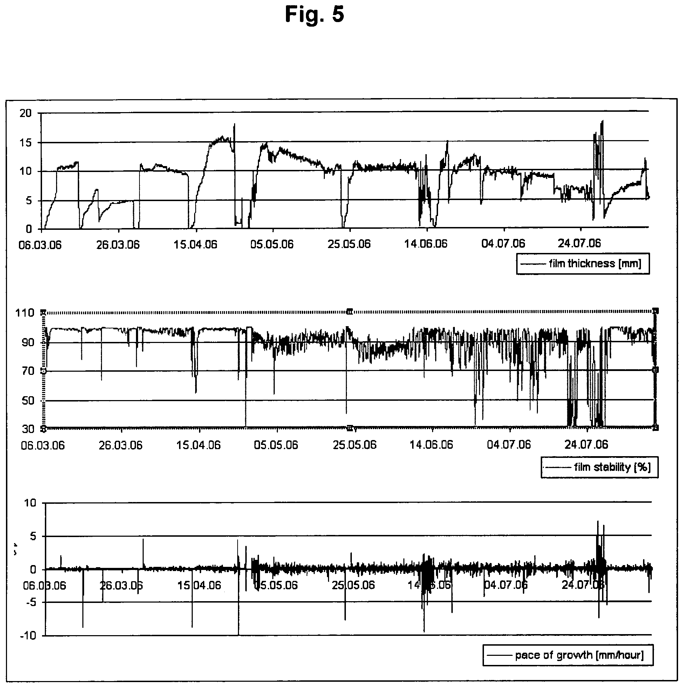

In a preferred embodiment of the process according to the invention, at least 2, more preferably at least 3 parameters and most preferably at least 4 parameters selected from the group consisting of
(i) layer thickness of the deposit,
(ii) stability of the deposit,
(iii) density of the deposit,
(iv) rate of growth of the deposit and
(v) homogeneity of the deposit
are measured simultaneously. Particularly preferably, layer thickness, stability and rate of growth of the deposit are measured simultaneously (cf. Fig. 5 to Fig. 7).

Preferably, the process according to the invention is performed continuously for a period of at least 1 day, more preferably at least 3 days, still more preferably at least 5 days, yet more preferably at least 7 days, most preferably at least 10 days and in particular at least 14 days.

Preferably, within the water bearing system of the papermaking plant, the regulating unit is located upstream with respect of the measuring system so that at least a portion of the deposit control agent that is fed into the water passes the measuring system.

The regulating unit may be any device that is suitable to add deposit control agents, solids or liquids, to the water-bearing system of the papermaking plant in a controlled, dosed fashion. Examples of suitable regulating units include automatic spray units, dropping funnels, injectors, syringes, and the like. The regulating unit feeds the deposit control agents into the vessels where the deposit is forming to impede or remove the formation of deposits.

In a preferred embodiment of the process according to the invention, the regulating unit for the deposit control agent is located at the inlet of a water stream to a chest, tower or water loop, and the measuring system is located at the outlet of the chest, tower or water loop.

In a preferred embodiment of the process according to the invention, steps a) to c) are automated, which can be achieved in that, e.g., the measuring signals generated by the light detector are made available to a comparator unit and correlated with comparative data stored in a memory. The result of this comparison is a benchmark signal. The benchmark signal can then be reproduced by an output unit of an evaluation module in the form of an evaluation signal that serves as a control signal for the regulating unit for biocides or other deposit control agents. In this manner, biocides or other deposit control agents can be fed automatically for inhibiting the growth of, and/or for eliminating, the biofilm.

Preferably, the deposit control agent comprises an oil-in-water emulsion which is formed from a hydrophobic phase (oil phase), at least one emulsifier and water and which comprises in the hydrophobic phase at least one active ingredient which is selected from the following group of substances used alone or in admixture:
a) a saturated or unsaturated, open-chain or cyclic, normal or isomeric hydrocarbon having 8-30 carbon atoms, and/or
b) a saturated or unsaturated fatty alcohol, a saturated or unsaturated fatty acid, a fatty acid monoalkyl ester, a fatty acid amide, or a fatty acid monoalkylamide of a saturated or unsaturated fatty acid, all of the compounds listed under b) having 8 to 30 carbon atoms, and/or
c) a mono- or polyester of a saturated or unsaturated fatty acid with 4 to 30 carbon atoms and monoalcohols and/or polyols, and/or
d) a polyamide of saturated or unsaturated fatty acids having 8 to 30 carbon atoms and aliphatic polyamines having 2 to 6 nitrogen atoms, and/or
e) an acyclic, monocyclic and/or bicyclic terpene, and/or
f) a polyoxyalkylene compound based on alkylene oxides and C₁₂-C₁₈ fatty alcohols and/or C₁₂-C₁₈ fatty acids and/or fatty acid glycerides of C₁₂-C₁₈ fatty acids.

### EXAMPLES

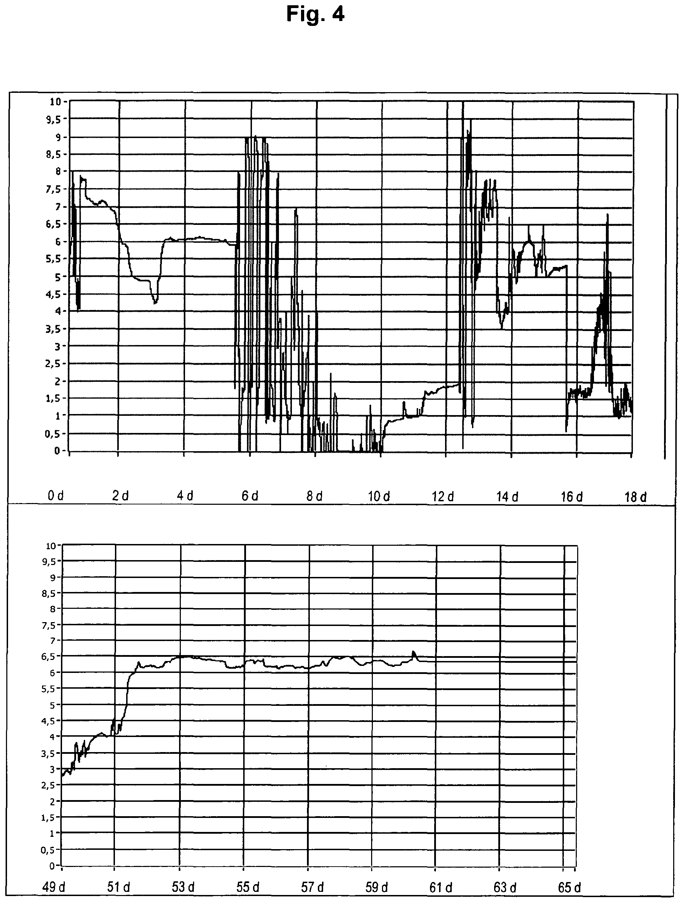

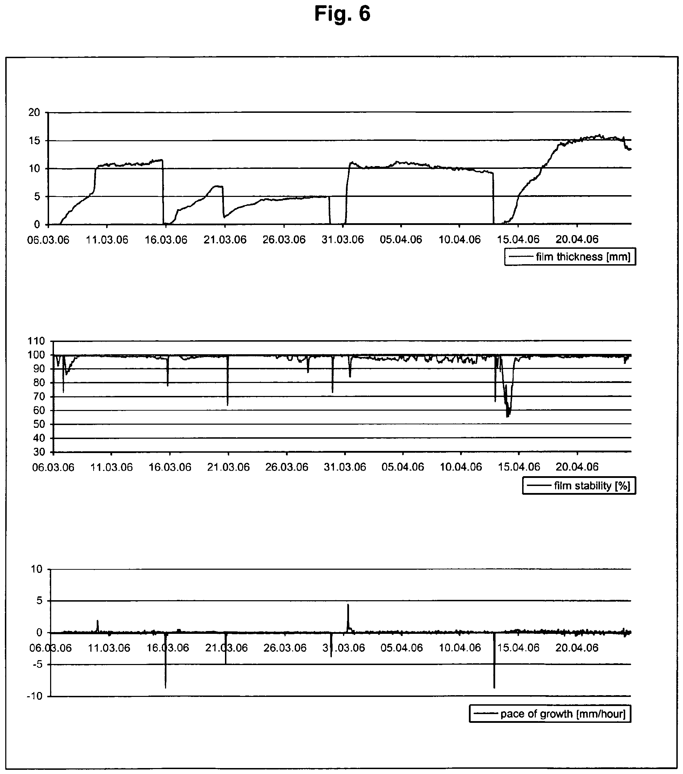

The measuring system according to the invention was used in paper mills. The rate of growth was calculated by the change of biofilm thickness over a certain period of time. The system distinguished between variations in layer thickness and layer density, both resulting in a backscattered radiation response.
a) The results of a first measurement are depicted in Figure 4. A significant change in deposit characteristics occurred when Tallofin® (multifunctional deposit control agent) was added to the shower water after six days.
b) The results of a second measurement are depicted in Figure 5. During the first period a conventional biocide was added. Thereafter, in the beginning of May, the addition of biocide was stopped and an oxidant was added instead. As shown in Figure 5, the thickness of the biofilm does not vary that much. However, it becomes evident from the measurement of film stability and of the rate of growth that the film structure changed.
c) The results of a third measurement are depicted in Figure 6. The deposits were more stable (pitch) than in examples a) and b).

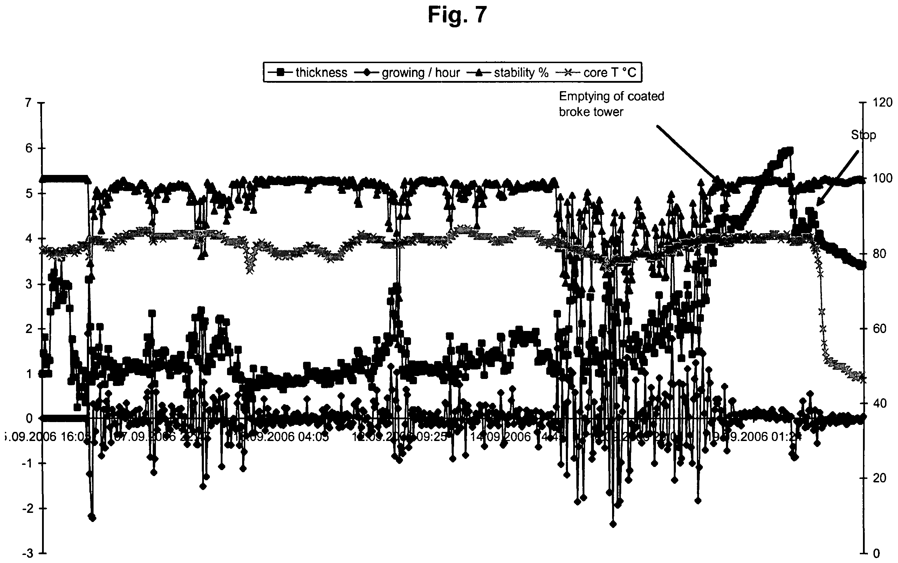

d) In Figure 7 it is shown how the data provided by the measurement system according to the invention may be correlated to changes in process parameters. Shortly before the stop, the broke tower was emptied, which can be clearly followed in the graph. This also indicates that the broke has a big influence on the deposit formation.

List of reference numerals:
- 10: Measuring system
- 12: Deposit/biofilm
- 14: Inside surface
- 16: Vessel wall
- 18: Light-emitting unit
- 20: Light-emitting unit
- 22: Optical fiber
- 24: Optical fiber
- 26: Detection unit
- 28: Slit
- 30: Light detector
- 40: Evaluation unit
- 42: Memory
- 44: Comparator unit
- 46: Loudspeaker

## Claims

1. Use of a measuring system comprising:
(a) at least one light-emitting unit (18, 20), comprising a first structure which is integrated in a vessel wall (16) and emits light into the vessel such that said light is scattered and/or reflected by a deposit (12), if any deposit is present, and
(b) a detection unit (26), comprising
(1) a second structure which is integrated in the vessel wall (16) and which is designed in such a manner that at least a portion of the light scattered and/or reflected by the deposit, if present, can pass from the interior of the vessel toward its exterior, and
(2) a light detector (30) disposed such that its light-sensitive surface faces the second structure, wherein the photo-sensitive surface of the light detector (26) is a photodetector array providing a spatially resolved signal for the scattered and/or reflected beam of light;
wherein the use of the measuring system comprises using the system for determining a characteristic of a deposit (12) that accumulates on the inside of a vessel wall (16) in a component of a papermaking plant which serves the purpose of accommodating or transferring an aqueous fiber suspension employed in papermaking from the spatially resolved signal provided by the photodetector array.

2. The use according to claim 1, wherein the first structure comprises an optical fiber (22, 24) positioned in a bore in the vessel wall (16) such that its light-emitting end is flush with the inside surface (14) of the vessel wall (16).

3. The use according to claim 2, wherein the bore has a diameter at the inside surface (14) of the vessel wall (16) in the range of from 10 to 500 µm.

4. The use according to any of the preceding claims, wherein the second structure (28) comprises a transparent material inserted into a slit (28) present in the vessel wall (16) such that said material is flush with the inside surface (14) of the vessel wall (16).

5. The use according to claim 4, wherein the slit (28) has a slit width of from 10 to 500 µm.

6. The use according to any of the preceding claims wherein the measuring system comprises an evaluation module (40) containing the following components:
(a) a memory (42), in which comparative data are deposited; and
(b) a comparator unit (44),
(i) in which there is applied, at the input end, a measuring signal from the light detector (30),
(ii) which communicates with the memory (42) for the purpose of transferring the comparative data, and
(iii) which is adapted to produce a benchmark signal as a result of comparison of the measuring signal with the comparative data.

7. The use according to any of the preceding claims, wherein the deposit (12) is a biofilm.

8. The use according to any of the preceding claims, wherein the rate of formation of the deposit (12) is measured.

9. The use according to any of the preceding claims, wherein the characteristic is selected from the group consisting of the layer thickness, density, homogeneity and stability.

10. A process for monitoring the accumulation of a deposit on the inside of a vessel wall of a component of a papermaking plant, where the component accommodates or transfers an aqueous fiber suspension employed in papermaking, comprising the step of determining a characteristic of said deposit according to the use defined in any of claims 1 to 6.

11. A process for the preparation of paper in a papermaking plant equipped with a measuring system as defined in any of claims 1-6 and a regulating unit for a deposit control agent, the process comprising the steps of:
a) determining a characteristic of a deposit with a measuring system according to the use defined in any of claims 1-6 to generate a measuring signal, where the deposit has accumulated on the inside of a vessel wall of a component of a papermaking plant and the component accommodates or transfers an aqueous fiber suspension employed in papermaking;
b) comparing the measuring signal generated in step a) with a predetermined threshold value; and
c) adjusting the supply of a deposit control agent by means of the regulating unit in dependence of the comparison made in step b).

12. The process as defined in claim 11, wherein the deposit control agent comprises an oil-in-water emulsion which is formed from a hydrophobic phase (oil phase), at least one emulsifier and water and which comprises in the hydrophobic phase at least one active ingredient which is selected from the following group of substances used alone or in admixture:
a) a saturated or unsaturated, open-chain or cyclic, normal or isomeric hydrocarbon having 8-30 carbon atoms, and/or
b) a saturated or unsaturated fatty alcohol, a saturated or unsaturated fatty acid, a fatty acid monoalkyl ester, a fatty acid amide, or a fatty acid monoalkylamide of a saturated or unsaturated fatty acid, all of the compounds listed under b) having 8 to 30 carbon atoms, and/or
c) a mono- or polyester of a saturated or unsaturated fatty acid with 4 to 30 carbon atoms and monoalcohols and/or polyols, and/or
d) a polyamide of saturated or unsaturated fatty acids having 8 to 30 carbon atoms and aliphatic polyamines having 2 to 6 nitrogen atoms, and/or
e) an acyclic, monocyclic and/or bicyclic terpene, and/or
f) a polyoxyalkylene compound based on alkylene oxides and C₁₂-C₁₈ fatty alcohols and/or C₁₂-C₁₈ fatty acids and/or fatty acid glycerides of C₁₂-C₁₈ fatty acids.

13. The process as defined in any of claims 10 to 12, wherein the characteristic is selected from the group consisting of the layer thickness, density, homogeneity and stability.

## Patentansprüche

1. Verwendung eines Messsystems umfassend:
(a) mindestens eine lichtemittierende Einheit (18, 20), umfassend eine erste Struktur, die in eine Gefäßwand (16) integriert ist und Licht in das Gefäß emittiert, so dass das Licht von einer Ablagerung (12) gestreut und / oder reflektiert wird, wenn eine Ablagerung vorhanden ist, und
(b) eine Detektionseinheit (26), umfassend
(1) eine zweite Struktur, die in die Gefäßwand (16) integriert ist und derart ausgebildet ist, dass zumindest ein Teil des von der Ablagerung gestreuten und / oder reflektierten Lichts, falls vorhanden, aus dem Inneren des Gefäßes nach außen austreten kann, und
(2) einen Lichtdetektor (30), der derart angeordnet ist, dass seine lichtempfindliche Oberfläche der zweiten Struktur zugewandt ist, wobei die fotoempfindliche Oberfläche des Lichtdetektors (26) eine Photodetektoranordnung ist, die ein räumlich aufgelöstes Signal für den gestreuten und / oder reflektierten Lichtstrahl bereitstellt;
wobei die Verwendung des Messsystems das Verwenden des Systems zum Bestimmen einer Eigenschaft einer Ablagerung (12) umfasst, die sich an der Innenseite einer Gefäßwand (16) in einer Komponente einer Papierherstellungsanlage ansammelt, die dazu dient, eine bei der Papierherstellung eingesetzte wässrige Fasersuspension aufzunehmen oder weiterzuleiten, und zwar aus dem von dem Photodetektorarray bereitgestellten räumlich aufgelösten Signal.

2. Die Verwendung nach Anspruch 1, wobei die erste Struktur eine optische Faser (22, 24) umfasst, die in einer Bohrung in der Gefäßwand (16) so positioniert ist, dass ihr lichtemittierendes Ende bündig mit der inneren Oberfläche (14) der Gefäßwand (16) ist.

3. Die Verwendung nach Anspruch 2, wobei die Bohrung an der Innenfläche (14) der Gefäßwand (16) einen Durchmesser im Bereich von 10 bis 500 µm aufweist.

4. Die Verwendung nach irgendeinem der vorhergehenden Ansprüche, wobei die zweite Struktur (28) ein transparentes Material umfasst, das in einen Schlitz (28) eingesetzt ist, der in der Gefäßwand (16) vorhanden ist, so dass das Material bündig mit der Innenfläche (14) der Gefäßwand (16) ist.

5. Die Verwendung nach Anspruch 4, wobei der Schlitz (28) eine Schlitzbreite von 10 bis 500 µm aufweist.

6. Die Verwendung nach irgendeinem der vorhergehenden Ansprüche, wobei das Messsystem ein Auswertungsmodul (40) umfasst, das die folgenden Komponenten enthält:
(a) einen Speicher (42), in dem Vergleichsdaten abgelegt sind; und
(b) eine Komparatoreinheit (44),
(i) in der eingangsseitig ein Messsignal von dem Lichtdetektor (30) anliegt,
(ii) die mit dem Speicher (42) zu dem Zweck kommuniziert die Vergleichsdaten zu übertragen, und
(iii) die ausgelegt ist, um als Ergebnis eines Vergleichs des Messsignals mit den Vergleichsdaten ein Benchmark-Signal zu erzeugen.

7. Die Verwendung nach irgendeinem der vorhergehenden Ansprüche, wobei die Ablagerung (12) ein Biofilm ist.

8. Die Verwendung nach irgendeinem der vorhergehenden Ansprüche, wobei die Bildungsrate der Ablagerung (12) gemessen wird.

9. Die Verwendung nach irgendeinem der vorhergehenden Ansprüche, wobei die Eigenschaft ausgewählt ist aus der Gruppe bestehend aus Schichtdicke, Dichte, Homogenität und Stabilität.

10. Ein Verfahren zum Überwachen der Ansammlung einer Ablagerung auf der Innenseite einer Gefäßwand einer Komponente einer Papierherstellungsanlage, wobei die Komponente eine bei der Papierherstellung verwendete wässrige Fasersuspension aufnimmt oder überträgt, umfassend den Schritt des Bestimmens einer Eigenschaft der Ablagerung gemäß Verwendung nach einem der Ansprüche 1 bis 6.

11. Ein Verfahren zum Behandeln von Papier in einer Papierherstellungsanlage, das mit einem Meßsystem nach einem der Ansprüche 1-6 und einer Reguliereinheit für ein Ablagerungskontrollmittel ausgerüstet ist, wobei das Verfahren die folgenden Schritte umfasst:
a) Bestimmen einer Eigenschaft einer Ablagerung mit einem Messsystem gemäß der in einem der Ansprüche 1-6 definierten Verwendung, um ein Messsignal zu erzeugen, wobei sich die Ablagerung auf der Innenseite einer Gefäßwand einer Komponente einer Papierherstellungsanlage angesammelt hat und die Komponente eine wässrige Fasersuspension enthält oder überträgt, die bei der Papierherstellung verwendet wird;
b) Vergleichen des in Schritt a) erzeugten Messsignals mit einem vorgegebenen Schwellenwert; und
c) Einstellen der Zufuhr eines Ablagerungskontrollmittels mittels der Reguliereinheit in Abhängigkeit von dem in Schritt b) durchgeführten Vergleich.

12. Das Verfahren nach Anspruch 11, wobei das Ablagerungskontrollmittel eine Öl-in-Wasser-Emulsion umfasst, die aus einer hydrophoben Phase (Ölphase), mindestens einem Emulgator und Wasser gebildet ist, und die in der hydrophoben Phase mindestens einen Wirkstoff enthält, der ausgewählt ist aus der folgenden Gruppe von Substanzen, die allein oder im Gemisch verwendet werden:
a) ein gesättigter oder ungesättigter, offenkettiger oder cyclischer, normaler oder isomerer Kohlenwasserstoff mit 8-30 Kohlenstoffatomen und / oder
b) ein gesättigter oder ungesättigter Fettalkohol, eine gesättigte oder ungesättigte Fettsäure, ein Fettsäuremonoalkylester, ein Fettsäureamid oder ein Fettsäuremonoalkylamid einer gesättigten oder ungesättigten Fettsäure, wobei alle unter b) genannten Verbindungen 8 bis 30 Kohlenstoffatome aufweisen und / oder
c) ein Mono- oder Polyester einer gesättigten oder ungesättigten Fettsäure mit 4 bis 30 Kohlenstoffatomen und Monoalkoholen und / oder Polyolen und / oder
d) ein Polyamid aus gesättigten oder ungesättigten Fettsäuren mit 8 bis 30 Kohlenstoffatomen und aliphatischen Polyaminen mit 2 bis 6 Stickstoffatomen und /
oder
e) ein acyclisches, monocyclisches und / oder bicyclisches Terpen und / oder
f) eine Polyoxyalkylenverbindung auf Basis von Alkylenoxiden und C₁₂-C₁₈ Fettalkoholen und / oder C₁₂-C₁₈ Fettsäuren und / oder Fettsäureglyceriden von C₁₂-C₁₈ Fettsäuren.

13. Das Verfahren nach irgendeinem der Ansprüche 10 bis 12, wobei die Eigenschaft ausgewählt ist aus der Gruppe bestehend aus Schichtdicke, Dichte, Homogenität und Stabilität.

## Revendications

1. Utilisation d'un système de mesure comprenant :
(a) au moins une unité électroluminescente (18, 20) comprenant une première structure qui est intégrée dans une paroi de cuve (16) et qui émet une lumière dans la cuve de sorte que ladite lumière est diffusée et/ou réfléchie par un dépôt (12), si celui-ci est présent, et
(b) une unité de détection (26) comprenant
(1) une seconde structure qui est intégrée dans la paroi de cuve (16) et qui est conçue de telle sorte qu'au moins une partie de la lumière diffusée et/ou réfléchie par le dépôt, le cas échéant, puisse passer de l'intérieur de la cuve vers son extérieur, et
(2) un détecteur de lumière (30) disposé de sorte que sa surface sensible à la lumière est face à la seconde structure, dans laquelle la surface photosensible du détecteur de lumière (26) est un réseau de photodétecteurs fournissant un signal résolu spatialement pour le faisceau de lumière diffusé et/ou réfléchi ;
dans laquelle l'utilisation du système de mesure comprend d'utiliser le système pour déterminer une caractéristique d'un dépôt (12) accumulé à l'intérieur d'une paroi de cuve (16) dans un composant d'une usine de fabrication de papier servant à recevoir ou à transférer une suspension de fibres aqueuse utilisée dans la fabrication du papier à partir du signal résolu spatialement fourni par le réseau de photodétecteurs.

2. Utilisation selon la revendication 1, dans laquelle la première structure comprend une fibre optique (22, 24) positionnée dans un alésage dans la paroi de cuve (16) de sorte que son extrémité électroluminescente affleure la surface intérieure (14) de la paroi de cuve (16).

3. Utilisation selon la revendication 2, dans laquelle l'alésage a un diamètre au niveau de la surface interne (14) de la paroi de cuve (16) dans la plage de 10 à 500 µm.

4. Utilisation selon l'une quelconque des revendications précédentes, dans laquelle la seconde structure (28) comprend un matériau transparent inséré dans une fente (28) présente dans la paroi de cuve (16) de sorte que ledit matériau affleure la surface interne (14) de la paroi de cuve (16).

5. Utilisation selon la revendication 4, dans laquelle la fente (28) a une largeur de fente de 10 à 500 µm.

6. Utilisation selon l'une quelconque des revendications précédentes, dans laquelle le système de mesure comprend un module d'évaluation (40) contenant les composants suivants :
(a) une mémoire (42) dans laquelle des données comparatives sont déposées ; et
(b) une unité de comparaison (44),
(i) dans laquelle est appliqué, à l'extrémité d'entrée, un signal de mesure provenant du détecteur de lumière (30),
(ii) qui communique avec la mémoire (42) dans le but de transférer les données comparatives, et
(iii) qui est conçue pour produire un signal de référence à la suite de la comparaison du signal de mesure avec les données comparatives.

7. Utilisation selon l'une quelconque des revendications précédentes, dans laquelle le dépôt (12) est un biofilm.

8. Utilisation selon l'une quelconque des revendications précédentes, dans laquelle la vitesse de formation du dépôt (12) est mesurée.

9. Utilisation selon l'une quelconque des revendications précédentes, dans laquelle la caractéristique est choisie dans le groupe constitué par l'épaisseur, la densité, l'homogénéité et la stabilité de la couche.

10. Procédé pour surveiller l'accumulation d'un dépôt à l'intérieur d'une paroi de cuve d'un composant d'une usine de fabrication de papier, où le composant reçoit ou transfère une suspension de fibres aqueuse utilisée dans la fabrication du papier, comprenant l'étape consistant à déterminer une caractéristique dudit dépôt selon l'utilisation définie dans l'une quelconque des revendications 1 à 6.

11. Procédé de préparation de papier dans une usine de fabrication de papier équipée d'un système de mesure selon l'une quelconque des revendications 1 à 6, et d'une unité de régulation pour un agent de contrôle de dépôt, le procédé comprenant les étapes consistant à :
a) déterminer une caractéristique d'un dépôt avec un système de mesure selon l'utilisation définie dans l'une quelconque des revendications 1 à 6, pour générer un signal de mesure, où le dépôt s'est accumulé à l'intérieur d'une paroi de cuve d'un composant d'une usine de fabrication de papier et le composant reçoit ou transfère une suspension de fibres aqueuse utilisée dans la fabrication du papier ;
b) comparer le signal de mesure généré à l'étape a) avec une valeur de seuil prédéterminée ; et
c) ajuster l'alimentation d'un agent de contrôle de dépôt au moyen de l'unité de régulation en fonction de la comparaison faite à l'étape b).

12. Procédé selon la revendication 11, dans lequel l'agent de contrôle de dépôt comprend une émulsion d'huile dans l'eau qui est formée à partir d'une phase hydrophobe (phase huileuse), d'au moins un émulsifiant et d'eau, et qui comprend dans la phase hydrophobe au moins un ingrédient actif qui est choisi dans le groupe suivant de substances utilisées seules ou en mélange :
a) un hydrocarbure saturé ou insaturé, à chaîne ouverte ou cyclique, normal ou isomère ayant de 8 à 30 atomes de carbone, et/ou
b) un alcool gras saturé ou insaturé, un acide gras saturé ou insaturé, un ester monoalkyle d'acide gras, un amide d'acide gras, ou un monoalkylamide d'acide gras d'un acide gras saturé ou insaturé, tous les composés énumérés au point b) ayant 8 à 30 atomes de carbone, et/ou
c) un mono- ou polyester d'un acide gras saturé ou insaturé avec 4 à 30 atomes de carbone et des monoalcools et/ou des polyols, et/ou
d) un polyamide d'acides gras saturés ou insaturés ayant de 8 à 30 atomes de carbone et des polyamines aliphatiques ayant de 2 à 6 atomes d'azote, et/ou
e) un terpène acyclique, monocyclique et/ou bicyclique, et/ou
f) un composé de polyoxyalkylène à base d'oxydes d'alkylène et d'alcools gras en C_{12-C18} et/ou d'acides gras en C_{12-C18} et/ou de glycérides d'acides gras d'acides gras en C_{12-C18}.

13. Procédé selon l'une quelconque des revendications 10 à 12, dans lequel la caractéristique est choisie dans le groupe constitué par l'épaisseur, la densité, l'homogénéité et la stabilité de couche.
